**Europäisches Patentamt**

**European Patent Office**

**Office européen des brevets**

(19)

(11) Veröffentlichungsnummer: **0 083 298**

**A1**

(12) ## EUROPÄISCHE PATENTANMELDUNG

(21) Anmeldenummer: **82730143.3**

(22) Anmeldetag: **06.12.82**

(51) Int. Cl.³: **F 16 L 11/02**

(30) Priorität: **29.12.81 JP 195780/81 U**

(43) veröffentlichungstag der Anmeldung:
**06.07.83 Patentblatt 83/27**

(84) Benannte Vertragsstaaten:
**DE FR GB SE**

(71) Anmelder: **Ohtsuka Co., Ltd.**
**7-19, 1-chome, Minamishinagawa**
**Shinagawa-ku Tokyo(JP)**

(72) Erfinder: **Oyamada, Mikitaka c/o Ohtsuka Co., Ltd**
**7-19, 1-chome, Minamishinagawa**
**Shinagawa-ku Tokyo(JP)**

(72) Erfinder: **Manabe, Terutoshi c/o AWA Seishi K.K.**
**Tokushima Kojo 10-18, 3-chome, Minamiyasocho**
**Tokushima City Tokushima Pref.(JP)**

(74) Vertreter: **Meissner, Peter E., Dipl.-Ing. et al,**
**Herbertstrasse 22**
**D-1000 Berlin 33(DE)**

(54) **Flexibles Rohr.**

(57) Die Erfindung betrifft ein flexibles Rohr, das sich zum Einsatz als Transportleitung für Gas hoher Temperatur eignet. Um die Hitzebeständigkeit und die Wärmeisolierung zu verbessern wird vorgeschlagen, daß das Rohr aus einem mehrschichtigem Material (3), (4), (5), bestehend aus zu 30-80% aromatisches Polyamidfibroid als Grundstoff enthaltender, hitzebeständiger Papierschicht (4) und dünner Plattenschicht sonstigen Materials, hergestellt ist.

FIG. 1

EP 0 083 298 A1

## Ausführliche Erläuterung zur Erfindung:

Die vorliegende Erfindung bezieht sich auf ein flexibles Rohr, welches sich zum Einsatz als Transportsleitung für Gase hoher Temperatur eignet.

Herkömmlich ist beispielsweise ein flexibles Rohr bekannt, das dadurch gekennzeichnet ist, daß ein Grundstoff, bei dem auf einer metallischen dünnen Platte Asbestpapier und Glasleinen mittels hitzebeständigen Bindemittels in der genannten Reihenfolge aufgeklebt sind, so aufgewickelt ist, daß sich die metallische Dünnplatte auf der inneren Seite befindet.

Das vorbezeichnete Asbest-Papier zielt auf Verbesserung der Hitzebeständigkeit und Wärmeisolierung beim Transportieren von heißen Gasen ab; das herkömmliche Asbestpapier konnte jedoch nicht immer der Anfordrung entsprechen, die an die Hitzebeständigkeit sowie Wärmeisolierung gestellt wurde.

Die vorliegende Erfindung berücksichtigt den genannten Hintergrund und zielt darauf ab, aus einem Grundstoff, der mehrschichtig aus einer hitzebeständigen, zu 30-80 % aromatisches Polyamidfibroid enthaltenden Papierschicht und einer Schicht dünner Platte sonstigen Materials besteht, so flexibles Rohr herzustellen.

Nachfolgend soll die vorliegende Erfindung anhand des in der beiliegenden Zeichnung dargestellten Ausführungsbeispiels näher erläutert werden.

Bei Figur 1 handelt es sich um ein erfindungsgemäßes, flexibles Rohr als Seitenansicht mit teilweisem Ausschnitt, während Figur 2 den Schnitt A-A in Figur 1 zeigt.

Figur 1 und Figur 2 machen ein Ausführungsbeispiel des erfindungsgemäßen, flexiblen Rohrs deutlich; das betreffende flexible Rohr kann in der Weise hergestellt werden, daß einem durch Aufwicklung bandförmigen Materials (1) sich bildenden Rohr weiter auf dessen Innen- und Außenfläche gewindeartige Falten verliehen werden, bevor das Rohr in achsialer Richtung komprimiert wird. Das vorgenannte bandförmige Material (1) wird gebildet, wenn eine metallische dünne Platte (3), ein hitzebeständiges Papier, enthaltend zu 30-80 % aromatisches Polyamidfibroid (4), und Glasleinen (5) in der genannten Reihenfolge mit einem hitzebeständigen Bindemittel zusammengeklebt werden. Außerdem wird das bandförmige Material (1) so gebildet, daß sich die metallische Dünnplatte (3) auf der inneren Seite des flexiblen Rohres befindet. Im dargestellten Beispiel ist von einer dreischichtigen Rohrwand die Rede, doch es hindert nicht, wenn das Glasleinen (5) weggelassen wird, so daß das Rohr eine zweischichtige Struktur erhält. Außerdem können sonstige Stoffe hinzugefügt werden, um die Struktur mehr als vier schichtig zu gestalten.

Übrigens ist es möglich, daß sonstige verschiedene Kombinationen angewandt werden, so daß beispielsweise die vorgenannte hitzebeständige Papierschicht (4) als innerste Schicht ausgebildet wird.

Das vorerwähnte, hitzebeständige Papier, welches das erfindungsgemäße, flexible Rohr bildet (4), setzt sich aus aromatischem Polyamidfibroid zu 30-80 %, gängigen Zusätze, wie z.B. anorganischen Fasern, natürlichen organischen Kurzfasern, synthetisch hergestellten, organischen Kursfasern, organischem Bindemittel, Schlichtemittel, Fixiermittel u.a., zu geeigneten Verhältnissen zusammen.

Bei aromatischem Polyamidfibroid handelt es sich um Kurzfasern aus aromatischem Polyamid, welche jedoch nicht einfach durch Kurzschneiden von Polyamid-Fasern entstehen, sondern so bei synthetischer Herstellung reguliert worden sind, um den Oberflächen-Inhalt pro Volumen möglichst zu vergrößern; die so hergestellten Fasern haben das Vermögen, sich selbst umzuschlingen, und sind in der Lage, nach Dispergieren in Wasser auf einem Netz Streifen (sheet) zu bilden. Diese Kurzfasern werden allgemein als Fibroid bezeichnet (fibroid = faserähnlich). Wenn nur die Hitzebeständigkeit im Vordergrund stehen sollte, können eventuell einfach durchgeschnittene Kurzfasern eingesetzt werden; doch man findet dabei kaum ein geeignetes Bindemittel, und verschiedene Eigenschaften von Fasern werden sehr stark von physikalischen Eigenschaften des jeweiligen Bindemittels beeinflußt. Um die ausreichende Papierfestigkeit von niedrigerem bis in höheren Temperaturbereich zu realisieren, werden die besonders hergestellten Kurzfasern eingesetzt; in höherem Temperatur-Bereich zersetzen sich sonstige organische Fasern und Bindemittel und haben keinen Beitrag zur Papierfestigkeit zu leisten. Diese genannten Kurzfasern sollen besonders in solchem höheren Temperaturbereich ihre Festigkeit entfalten.

Anorganische Fasern werden wegen der Hitzebeständigkeit, nämlich zwecks der Aufrechthaltung der Streifenform bei höheren Temperaturen und Beibehaltung der Festigkeit eingesetzt. Als natürliche Fasern sind Asbestfaser, Kalziummetasilikat bekannt. Als synthetische Fasern haben Glasfasern, Keramikfasern, Rockwool, Slagwool, Gipsfasern Wirkung. Es gibt zwar verschiedene Stärke bei Glasfasern; bevorzugterweise sollen solche mit einer Faserstärke von unter 19 µ eingesetzt werden.

Natürliche organische Kurzfasern werden mit dem Ziel zum Erreichen der Festigkeit im Normalzustand und bei Nachbearbeitung angewandt, tragen gleichzeitig zu guter Papierverarbeitbarkeit bei. Parallel zu den oben genannten wird eine oder zwei Fasersorten von Halz-, Bast-, Blattfasern u.a. verwendet, wobei durch Mischung die Länge entsprechend gewählt wird.

Synthetisch hergestellte, organische Kurzfasern werden eingesetzt, um Zerreißfestigkeit, Biegsamkeit und Schwerflammbarkeit zu erzielen; bevorzugt werden dabei schwerflammbar veredelte Fasern, wie Vinylchloridfasern, Modacrylfasern, Polychlorfasern und sonstige schwerentflammbar behandelte, verschiedene Kunstfasern verwendet.

Organisches Bindemittel soll die Flexiblität des Produktes, mechanische Festigkeit im niedrigeren Temperaturbereich, Schwerentflammbarkeit und gute Verarbeitbarkeit bewirken. Latex-Produkte, wie NBR, SBR, CR, NR u.a., Harze auf der Acryl-Basis oder verschiedene Emulsionen auf Basis von Vinylchlorid- oder Vinylidenchlorid-Latex sind zwar wirksam, aber bevorzugt werden solche schwerentflammbaren, die in ihrem Molekül Chlor enthalten.

Als Schichtemittel, welches zur Erzielung der Diffusionsverhinderung von verschiedenen Bearbeitungsharzen ins Produkt und Eignung zum Drucken zugesetzt wird, kommen alle Produktarten in Frage, die auf Basis von Erdöl, Resin, Wachs, Stärke u.a. aufgebaut worden sind.

Das Fixiermittel dient zur Fixierung von Ionen der zugesetzten Chemikalien auf die Faserstruktur; alle mehrwertigen Metallsalze dürfen eingesetzt werden. Hilfsweise können hochmolekulare Mittel hoher Ionisierung von Fall zu Fall verwendet werden.

Bei Herstellung des vorbezeichneten hitzebeständigen Papiers (4) werden zunächst natürliche organische Kurzfaser in einen Breiapparat (Pulper) gebracht und zerfasert. Der so entstehende Brei wird in einem Refiner zu 15- 80° SR aufgelöst und dann in einem Mischer (mixing chest) mit aromatischem Polyamidfibroid, anorganischen Fasern und synthetischen organischen Kurzfasern versetzt und genug gerührt. Danach werden sonstige Zusätze, wie organisches Bindemittel, Schlichtemittel und Fixiermittel, jeweils nach für bestimmte Zeit haltender Rührung nacheinander zugegeben. Nachdem anschließend sichere Fixierung von einzelnen Zusätzen festgestellt worden ist, wird das Ganze in einen Behälter (machine chest) gebracht, von dem der fertige Rohstoff je nach erforderlicher Papierherstellungsmenge auf eine Siebpartie geliefert wird, so daß ein Papierstreifen geformt wird. Nach dem Wasserentzug entsteht somit ein fertiges Streifen, das über einen Trockner getrocknet und als endgültiges Produkt aufgewickelt wird.

Zwei Beispiele des nach dem oben beschriebenen Verfahren hergestellten, hitzebeständigen Papiers (4) sollen vorgestellt werden:

Mischungsbeispiel 1:

| Zusatzstoffe | Mischungsverhältnis (nach dem Gewicht) |
|---|---|
| Aromatisches Polyamidfibroid | 55 |
| Glasfaser | 20 |

| | |
|---|---|
| Asbest | 10 |
| NBKP | 5 |
| Schwerentflammbares Vinylon | 10 |
| Vinylchloridlatex | 10 |
| Synthetisches Schlichtemittel | 1 |
| Schwefelsäure-Band (Fixiermittel) | 2 |

Beispiel 2:

| Zusatzstoffe | Mischungsverhältnis (nach dem Gewicht) |
|---|---|
| Aromatisches Polyamidfibroid | 55 |
| Rock wool | 15 |
| Kalziummetasilikat | 20 |
| NBKP | 5 |
| Schwerentflammbare Acrylfaser | 10 |
| Vinylchlorid-Latex | 10 |
| Schlichtemittel auf Erdöl-Basis | 1 |
| Schwefelsäure-Band (Fixiermittel) | 2 |

Die hitzebeständigen Papiere nach der oben genannten Mischung 1,2 haben folgende physikalische Eigenschaften:

| | Beispiel 1 | Beispiel 2 |
|---|---|---|
| Menge $(g/m^2)$ | 128 | 135 |
| Dicke (mm) | 0.246 | 0.251 |
| Dichte $(g/cm^3)$ | 0.520 | 0.538 |
| Zugfestigkeit (kg/15mm) bei Raumtemperatur | | |
| Vertikal | 6.8 | 6.0 |
| Quer | 4.5 | 4.2 |

| | | |
|---|---|---|
| Hitzebeständigkeit (300°C x 60 Minuten) | 5.6 | 5.0 |
| Knickfestigkeit (häufigkeit/0.5 kg) | | |
| Vertikal | 600 | 300 |
| Quer | 550 | 250 |
| Zerreißfestigkeit (g) | | |
| Vertikal | 100 | 100 |
| Quer | 120 | 120 |

Die hitzebeständigen Papiere, die nach den oben angegebenen Mischverhältnissen hergestellt worden sind, behalten auf Grund der Versuche bei Bedingungen von 300°C x 60 Minuten noch ungefähr 80 bis 90 % der ursprünglichen Papierfestigkeit und haben außerdem eine ausgezeichnete Hitzebeständigkeit. Da der Gehalt an aromatischem Polyamidfibroid, wie oben erwähnt, eingestellt worden ist, ergibt sich eine sehr gute Bearbeitbarkeit des Produktes; verschiedene Festigkeiten bei Normaltemperatur sind ausgeglichenerweise wirksam.

Vinylchlorid-Latex wird als organisches Bindemittel eingesetzt und dient dazu, die Festigkeit im Normalzustand zu verstärken und den Effekt der Schwerentflammbarkeit zu erzielen. Vinylchlorid-Latex bleibt sowohl bei der Raumtemperatur als auch bei Erhitzung auf höhere Temperatur flexible.

Die nach erfindungsgemäßem Verfahren einzusetzenden, hitzebeständigen Papiere werden, wie in den beiden Anwendungsbeispielen gezeigt, in Verbindung mit schwerentflammbaren und wenig rauchenden Materialien verwendet.

Das flexible Rohr, worauf sich die vorliegende
Erfindung bezieht, wird aus den oben erwähnten Stoffen
nach dem hier beschriebenen Verfahren hergestellt und
besitzt hervorragende Eigenschaften hinsichtlich der
Hitzebeständigkeit, Wärmeisolierung, Entflammbarkeit und
Biegsamkeit.

BESCHREIBUNG

Flexibles Rohr

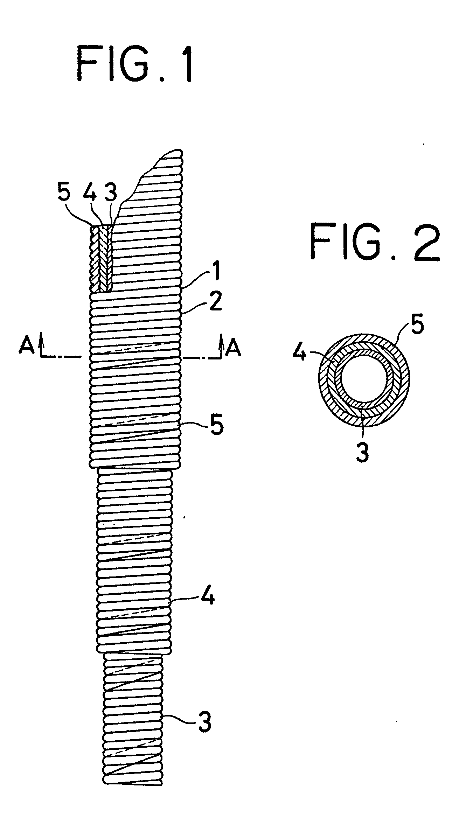

Patentanspruch:

Flexibles Rohr, dadurch gekennzeichnet, daß es aus mehrschichtigem Material, bestehend aus zu 30-80 % aromatisches
Polyamidfibroid als Grundstoff enthaltender, hitzebeständiger Papierschicht und dünner Plattenschicht sonstigen
Materials, hergestellt ist.

# FIG. 1

# FIG. 2

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 573 938 (BRITISH CELLOPHANE LTD.) * Seite 4, Zeilen 55-103; Figuren 1,2 * | 1 | F 16 L   11/02 |
| | --- | | |
| A | GB-A-1 017 331 (BTR INDUSTRIES LTD.) * Ansprüche 1,5,15 * | 1 | |
| | --- | | |
| A | FR-A- 753 718 (SOCIETE INDUSTRIELLE DES TELEPHONES) * Seite 2, Zeilen 12-22; Figuren 1,2 * | 1 | |
| | --- | | |
| A | US-A-1 942 468 (P.B. ANDREWS) * Seite 1, Zeilen 75-108; Figuren 1,2 * | 1 | RECHERCHIERTE SACHGEBIETE (Int. Cl. ³) |
| | --- | | |
| A | FR-A-1 508 379 (THE WIREMOLD COMPANY) * Seite 1, Zeilen 1-13 * | | F 16 L |
| | ----- | | |

Der vorliegende Recherchenbericht wurde für alle Patentansprüche erstellt.

| Recherchenort DEN HAAG | Abschlußdatum der Recherche 27-03-1983 | Prüfer ANGIUS P. |
|---|---|---|